Europäisches Patentamt

European Patent Office

Office européen des brevets

(11) Veröffentlichungsnummer: **0 285 749**

**A2**

# EUROPÄISCHE PATENTANMELDUNG

(21) Anmeldenummer: **88100662.1**

(51) Int. Cl.4: **H04M 1/60**

(22) Anmeldetag: **19.01.88**

(30) Priorität: **08.04.87 DE 3711897**

(43) Veröffentlichungstag der Anmeldung:
**12.10.88 Patentblatt 88/41**

(84) Benannte Vertragsstaaten:
**AT BE CH ES FR GB IT LI LU NL SE**

(71) Anmelder: **TELENORMA Telefonbau und Normalzeit GmbH**
**Mainzer Landstrasse 128-146**
**D-6000 Frankfurt am Main(DE)**

(72) Erfinder: **Pönitz, Gerd, Dipl.-Ing.**
**Teutonenweg 3A**
**D-6057 Dietzenbach(DE)**
Erfinder: **Lange, Heinz, Dipl.-Ing.**
**Buchenstrasse 6**
**D-6230 Frankfurt 80(DE)**

(54) **Schaltungsanordnung für eine Fernsprechteilnehmerstation mit einer Lauthör- bzw. Freisprecheinrichtung.**

(57) In einer Fernsprechteilnehmerstation mit einer schleifengespeisten Lauthöreinrichtung und Wahlmöglichkeit bei aufgelegtem Handapparat ist der Gabelumschaltkontakt und die Lauthörtaste an einer ersten Steuereinrichtung angeschlossen, die aus einem Energiespeicher gespeist wird, welcher im Ruhezustand der Fernsprechteilnehmerstation mit einem geringen Schleifenstrom im geladenen Zustand gehalten wird. Bei Abnehmen des Handapparats bzw. Betätigen der Lauthörtaste bei aufliegendem Handapparat wird auf Veranlassung der ersten Steuereinrichtung die Scheife durch Ansteuerung eines Schaltmittels geschlossen, so daß sich die Fernsprechteilnehmerstation im Betriebszustand bzw. im Zustand "Wahl bei aufgelegtem Handapparat" befinde. Das Schaltmittel dient zusätzlich auch zur Erzeugung der Nummernschalterimpulse, wobei die Steuersignale aus der zweiten Steuereinrichtung zur ersten Steuereinrichtung und von dort zum Schaltmittel gelangen.

Fig. 1

## Schaltungsanordnung für eine Fernsprechteilnehmerstation mit einer Lauthör-bzw. Freisprecheinrichtung

Die Erfindung betrifft eine Schaltungsanordnung für eine Fernsprechteilnehmerstation mit einer schleifenstromgespeisten Lauthöreinrichtung und Wahlmöglichkeit bei aufgelegtem Handapparat, wobei aufgrund der Betätigung der Lauthörtaste bei aufliegendem Handapparat die Schleife mittels eines Schaltmittels geschlossen wird.

Eine derartige Schaltungsanordnung ist bereits bekannt. So wird in der DE-OS 31 20 283 eine Schaltungsanordnung für eine leitungsgespeiste Lautfernsprechstation mit Lauthörverstärker und Wahlmöglichkeit bei aufgelegtem Handapparat beschrieben, bei welcher die Lauthörtaste mehrere Kontakte aufweist. Im Ruhezustand des Gabelumschaltkontakts, d.h. bei aufliegendem Handapparat, wird durch die Betätigung der Lauthörtaste ein bistabiles Relais an die Schleifenspannung angeschaltet, welches daraufhin anspricht und mit seinem Kontakt den Gabelumschaltkontakt überbrückt und die Sprechschaltung und den Lauthörverstärker an die Sprechadern anschaltet. Nachteilig bei der bekannten Schaltungsanordnung ist, daß die Lauthörtaste mehrere Kontakte aufweisen und ein bistabiles Relais vorhanden sein muß.

Die Aufgabe der Erfindung besteht nun darin, eine derartige Schaltungsanordnung anzugeben, bei welcher die Lauthörtaste einfacher ausgebildet und auf ein deartiges bistabiles Relais verzichtet werden kann.

Diese Aufgabe wird dadurch gelöst, daß das Schaltmittel von einer ersten Steuereinrichtung gesteuert wird, an welcher die Lauthörtaste angeschlossen ist und daß die erste Steuereinrichtung aus einem Energiespeicher gespeist wird, welcher im Ruhezustand der Fernsprechteilnehmerstation mit einem geringen Schleifenstrom im geladenen Zustand gehalten wird.

Im Gegensatz zu der bekannten Schaltungsanordnung wird gemäß der Erfindung nur ein Kontakt an der Lauthörtaste benötigt und das Schaltmittel kann als Transistor ausgebildet sein.

Die Verwendung eines geringen Schleifenstroms zum Laden eines in einem Fernsprechapparat angeordneten Energiespeichers ist aus der DE-OS 23 00 929 an sich bereits bekannt.

Eine Weiterbildung der Erfindung besteht darin, daß an der ersten Steuereinrichtung der Gabelumschaltkontakt angeschlossen ist und bei abgenommenen Handapparat das Schaltmittel auf Veranlassung des Gabelumschaltkontakts geschlossen wird.

Das die Schleife schließende Schaltmittel stellt somit sowohl den Gabelumschaltkontakt als auch den Kontakt der Lauthörtaste dar, wobei in der ersten Steuereinrichtung eine entsprechende Logik vorhanden ist.

Eine Weiterbildung der Erfindung besteht darin, daß an der ersten Steuereinrichtung der Kontakt einer Freisprechtaste angeschlossen ist und daß bei aufliegendem Handapparat bei Betätigung der Freisprechtaste das Schaltmittel auf Veranlassung der ersten Steuereinrichtung geschlossen wird.

Eine Weiterbildung der Erfindung besteht auch darin, daß die erste Steuereinrichtung Ausgänge aufweist, an welchen die Schaltzustände des Gabelumschaltkontaktes, der Lauthörtaste und der Freisprechtaste signalisiert werden und daß diese Ausgänge mit einer zweiten Steuereinrichtung verbunden sind.

Die zweite Steuereinrichtung kann dabei als Mikroprozessor ausgebildet sein.

Eine Weiterbildung der Erfindung besteht auch darin, daß das Schaltmittel über die erste Steuereinrichtung auf Veranlassung der zweiten Steuereinrichtung zur Aussendung von Wahlimpulsen gesteuert wird.

Das Schaltmittel kann zusätzlich zu der Funktion der Gabelumschaltkontakts, des Kontakts der Lauthörtaste und des Kontakts der Freisprechtaste auch noch die Funktion des nsi-Kontakts übernehmen, wenn von der zweiten Steuereinrichtung, an welcher die Wähltastatur angeschlossen ist, die notwendigen Steuersignale geliefert werden.

Weitere Vorteile ergeben sich aus den Unteransprüchen.

Die Erfindung wird anhand eines Ausführungsbeispiels näher erläutert, welches in der Zeichnung dargestellt ist. Es zeigt:

Fig. 1 das Blockschaltbild einer Fernsprechteilnehmerstation und

Fig. 2 die Schaltungsanordnung der ersten Steuereinrichtung.

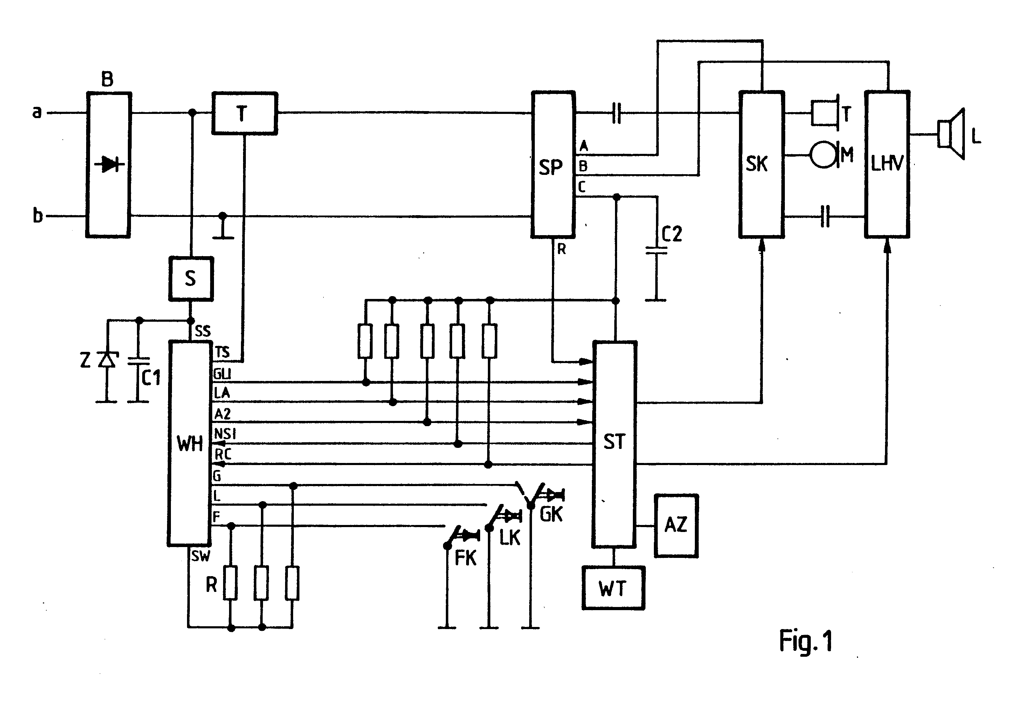

Bei dem in Fig. 1 gezeigten Blockschaltbild einer Fernsprechteilnehmerstation sind nur diejenigen Einrichtungen gezeigt, welche zum Verständnis der Erfindung unbedingt notwendig sind. An den Sprechadern a/b ist zunächst ein Brückengleichrichter B angeschlossen, welcher unabhängig von der Polarität der Sprechaderen für eindeutige Polaritätsverhältnisse für die nachgeschalteten Einrichtungen sorgt. Wird das Schaltmittel T geschlossen, so fließt über die Speiseschaltung SP der Schleifenstrom. Das Schaltmittel T kann als Transistor ausgebildet sein und erfüllt, wie weiter unten noch näher erläutert, die Funktion des Gabelumschaltkontakts, des Kontakts der Lauthörtaste, des Kontakts der Freisprecheinrichtung und des nsi-Kontakts zur Aussendung von Wahlimpulsen durch Schleifenunterbrechungen.

Die Speiseschaltung SP ist wechselspannungsmäßig mit der Sprechkreisschaltung SK verbunden. An der Sprechkreisschaltung SK ist die Hörkapsel H und das Mikrofon M und wechselspannungsmäßig der Lauthörverstärker LH angeschlossen. Die Stromversorgung der Sprechkreisschaltung SK und des Lauthörverstärkers LH erfolgt aus der Speiseschaltung SP, und zwar über deren Ausgang A bzw. B.

Die erste Steuereinrichtung WH erhält im Ruhezustand der Fernsprechteilnehmerstation ihre Energie aus einem Kondensator C1, welcher über einen, in der Größenordnung von kleiner als 20 µA liegenden Schleifenstrom im geladenen Zustand gehalten wird. Dieser geringe Strom, welcher einen Wert aufweist, der weit unterhalb des Stromes bei geschlossener Schleife liegt, wird durch einen Strombegrenzer S begrenzt. Die Höhe der dem Speiseeingang SS der ersten Steuereinrichtung WH zugeführte Spannung wird durch die Zenerdiode Z bestimmt. An der ersten Steuereinrichtung WH ist der Kontakt GK des Gabelumschalters, der Kontakt LK der Lauthörtaste und der Kontakt FK der Freisprechtaste angeschlossen. Die erste Steuereinrichtung WH ist über mehrere Leitungen mit einer zweiten Steuereinrichtung ST verbunden, an welcher die Wähltastatur WT angeschlossen ist. Die zweite Steuereinrichtung ST kann als Mikroprozessor ausgebildet sein und u.a. zur Erzeugung von Wahlimpulsen programmiert sein, deren Ziffernwerte über die Zifferntasten der Wähltastatur WT eingegeben werden. Die Speisung der zweiten Steuereinrichtung ST erfolgt über den Ausgang C der Speiseschaltung SP.

Im Ruhezustand der Fernsprechteilnehmerstation, d.h. bei aufliegendem Handapparat, ist der Kontakt GU geschlossen, wordurch Erdpotential am Eingang G der ersten Steuereinrichtung WH anliegt. Über die Sprechadern a/b wird ein geringer Schleifenstrom von maximal 20 µA gezogen.

Dieser dient zur Erhaltung des Ladezustands des Kondensators C1, dessen Spannung durch eine parallel geschaltete Zenerdiode Z begrenzt wird. Im Ruhezustand der Fernsrpechteilnehmerstation legt die erste Steuereinrichtung WH über ihren Ausgang SW impulsweise eine positive Spannung an die an die Eingänge G,L und F angeschlossen "pull-up"-Widerstände, wobei mit dem Anlegen der Spannung diese Eingänge von der ersten Steuereinrichtung WH angetastet werden. Diese Maßnahme ist deshalb notwendig, da die Werte dieser Widerstände aus bestimmten Gründen nicht oberhalb eines Wertes von 100 kOhm liegen dürfen. Bei der Versorgungsspannung würde dabei ein Strom von 100 µA fließen. Dieser Wert liegt jedoch um ein Vielfaches höher als der über die Schleife gezogene Strom. Durch das kurzzeitige Anlegen der Versorgungsspannung an die Widerstände bei gleichzeitiger Abtastung der genannten Eingänge wird der Stromverbrauch entsprechend verringert. Die Abtastung kann beispielsweise im Abstand von jeweils 5 ms erfolgen, wobei an die Widerstände jedoch nur für wenige µs Spannung angelegt wird. In der übrigen Zeit werden die Eingänge G, L und F niederohmig auf Masse geschaltet, wodurch sich zusätzlich die Störanfälligkeit verringert.

Wird nun entweder der Handapparat abgenommen, die Lauthörtaste oder die Freisprechtaste betätigt, so wird die veränderte Kontaktlage von der ersten Steuereinrichtung WH erkannt und ein entsprechendes Signal am Ausgang TS erzeugt, welches das Schaltmittel T durchsteuert, worauf die Schleife geschlossen und damit der Betriebszustand der Fernsprechteilnehmerstation hergestellt wird. Die Speiseeinrichtung SP liefert für die einzelnen Einrichtungen die Speisespannung und für die Steuereinrichtung ST zusätzlich ein Rücksetzsignal am Ausgang R, welches ca. 500 ms nach Fließen des Schleifenstroms wirksam wird. Danach beginnt der Anlauf der Steuereinrichtung ST. Anschließend erfolgt die Auswertung der von der ersten Steuereinrichtung WH an die zweite Steuereinrichtung ST gelieferten Schaltsignale des Kontakts GU des Gabelumschaltkontakts, des Kontakts LK der Lauthörtaste bzw. des Kontakts FR der Freisprechtaste. Diese Signale werden in der ersten Steuereinrichtung WH derart aufbereitet, daß für jeden der Kontakte an jeweils dem zugeordneten Ausgang und zwar GU, LA bzw. FR das die jeweilige Schaltstellung kennzeichnende Signal ansteht. In der Steuereinrichtung ST werden die Tastensignale der Lauthörtaste und der Freisprechtaste eingespeichert und der Lauthörverstärker LHV auf Veranlassung der zweiten Steuereinrichtung ST eingeschaltet. Bei erneutem Auftreten eines Tastensignals, d.h. bei erneuter Betätigung der Lauthöroder Freisprechtaste wird der Lauthörverstärker LHV auf Veranlassung der zweiten Steuereinrichtung ST wieder abgeschaltet. Weiterhin erfolgt in der zweiten Steuereinrichtung ST eine logische Verknüpfung der Tastensignale mit der Schaltstellung des Gabelumschaltkontakts GK, so daß auch der Betriebszustand "Wahl bei aufliegendem Handapparat" erkennbar ist, wenn bei aufliegendem Handapparat die Lauthörtaste bzw. Freisprechtaste betätigt wird.

Nach Eingabe der Rufnummer über die Wähltastatur WT sendet die zweite Steuereinrichtung ST die entsprechenden Nummernschalterimpulse zum Eingang NSI der ersten Steuereinrichtung WH, worauf das am Ausgang TS der ersten Steuereinrichtung WH anliegende Dauersignal zur Durchsteuerung des Schaltmittels T im Rhythmus der Nummernschalterimpulse unterbrochen wird. Durch das rhythmische Sperren des Schaltmittels T gemäß den Nummernschalterimpulsen werden Schleifenunterbrechungen auf den Sprechadern a/b erzeugt und auf diese Weise die Rufnummer zur Vermittlungsstelle gesendet. Während der Aussendung der Nummernschalterimpulse wird die Sprechkreisschaltung SK auf Veranlassung der zweiten Steuereinrichtung ST gesperrt.

Die erste Steuereinrichtung WH kann als CMOS-Baustein ausgebildet sein, wobei die Ausgänge GU, LA und FR als "open drain"-Ausgang ausgebildet sind. Derartige Bausteine zeichnen sich durch eine besonders geringe Stromaufnahme aus.

Die Steuereinrichtung ST wird aus der Speiseschaltung SP und zwar aus dem Eingang C gespeist. Mit der Speisespannung wird ein parallel geschalteter Kondensator C2 im Ladezustand gehalten. Wird nun am Ende eines Gesprächs der Handapparat aufgelegt, d.h. der Gabelumschaltkontakt GK betätigt, so schaltet sich die zweite Steuereinrichtung ST selbst ab, wodurch die Ladespannung des Kondensators C2 für eine längere Zeit erhalten bleibt, da ja das Schaltmittel T auf Veranlassung der zweiten Steuereinrichtung ST gesperrt wurde. An der Steuereinrichtung ST ist eine Anzeigevorrichtung AZ angeschlossen, welche zur Anzeige der eingegebenen Rufnummer, zur Anzeige von Gebühreninformationen, usw. dient. Damit bei Gesprächsende evtl. Gebühreninformationen auf der Anzeigevorrichtung erhalten bleiben, ist in der ersten Steuereinrichtung WH ein Zeitglied vorhanden, welches nach einer vorgegebenen Zeit die Anzeigevorrichtung AZ vom Kondensator C2 abschaltet. Hierdurch werden Fehlanzeigen bei Unterschreiten der Versorgungsspannung der Anzeigevorrichtung AZ vermieden.

Weiterhin ist in der ersten Steuereinrichtung WH eine Einrichtung vorhanden, welche ein künstliches Rücksetzsignal für die zweite Steuereinrichtung ST in dem Fall erzeugt, in dem nach Abschaltung der zweiten Steuereinrichtung ST und vor Absinken der Spannung des Kondensators C2 unterhalb die Betriebsspannung der Steuereinrichtung ST bei Betätigung einer der Kontakte GK, LK bzw. FK erzeugt. Die Speiseschaltung SP ist derart gestaltet, daß diese nur dann ein Rücksetzsignal am Ausgang R erzeugt, wenn die Spannung des Kondensators C2 nach Fließen des vollen Schleifenstroms einen bestimmten Wert erreicht hat.

Es wird noch darauf hingewiesen, daß die Kontakte GK bzw. LK und FK als Folienkontakte ausgebildet sein können.

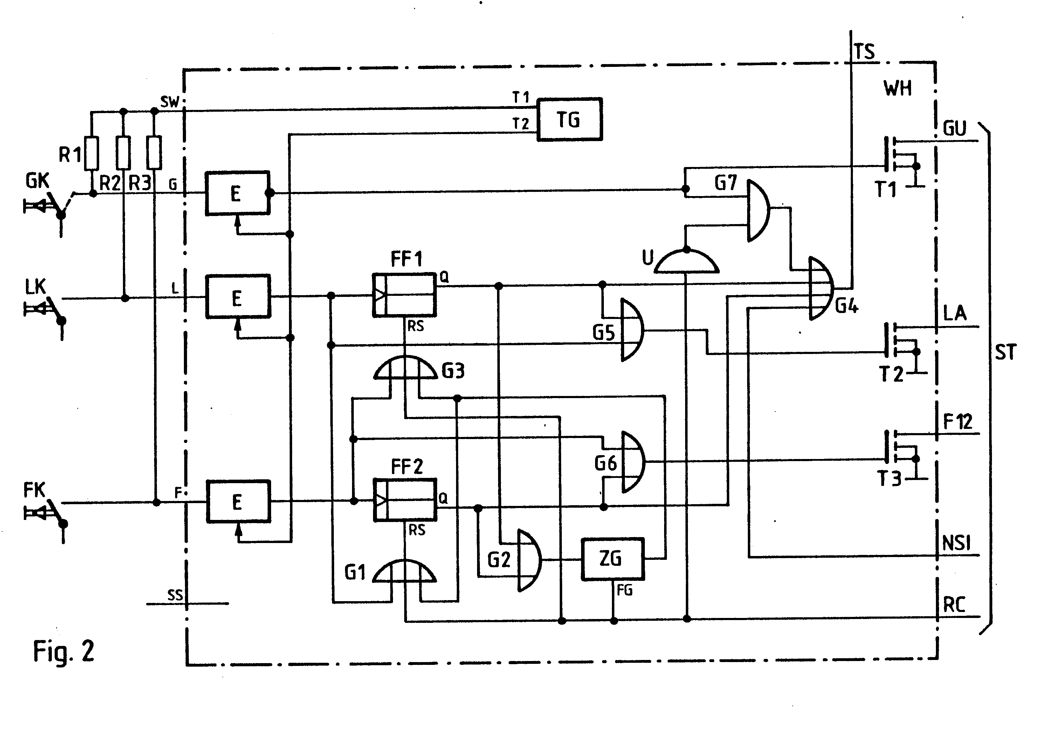

Der Aufbau der ersten Steuereinrichtung WH wird anhand der Schaltung gem. Fig. 2 erläutert. Die Kontakte der Tasten GK (Gabelumschalter), LK (Lauthörtaste) und FK (Freisprechtaste) sind, wie bereits oben erwähnt, an den Eingängen G bzw. L, bzw. F der ersten Steuereinrichtung WH angeschlossen. Jeder dieser Eingänge ist mit einem "pull-up"-Widerstand R1, bzw. R2, bzw. R3 verbunden. Der Taktgeber TG erzeugt zwei Taktsignale, von denen das eine Taktsignal, und zwar T1 über den Ausgang SW an die besagten Widerstände angelegt wird. Der Abstand der Taktimpulse liegt bei ca. 5 ms. Während des Anliegens eines Taktsignals T1 wird ein kürzeres Taktsignal T2 an die mit den den Kontakten beschalteten Eingängen verbunden Entprellschaltungen E angelegt, wobei bei Schließen eines der genannten Kontakte am Ausgang der Entprellschaltung E ein Signal von Dauer des Taktsignals T2 entsteht. Die Taktsignale T1 und T2 sind derart gestaltet, daß zunächst das Taktsignal T1 beginnt, anschließend folgt der Beginn des Taktsignals T2 mit einiger Verzögerung, wobei das Taktsignal T1 wiederum nach einiger Verzögerung nach Ende des Taktsignals T2 endet. Die Dauer der Taktsignale T1 und T2 liegt im Bereich von einigen µs.

Wird der Kontakt GK des Gabelumschalters geöffnet, so wird der Transistor T1 leitend und es entsteht ein entsprechendes Signal am Ausgang GU. Dieses Signal ist jedoch in der zweiten Steuereinrichtung ST noch nicht wirksam. Da im Ruhezustand der Fernsprechteilnehmerstation am Eingang RC 0-Potential anliegt, ist das UND-Gatter G7 über die Umkehrstufe U vorbereitet und wird durch das H-Signal aus der Entprellschaltung E durchgeschaltet, so daß am Ausgang desselben ein H-Signal entsteht, welches über das ODER-Gatter G4 auf die Leitung TS gelangt und, wie bereits beschrieben, die Durchschaltung des Schaltmittels T veranlaßt (siehe Fig. 1). Nachdem die zweite Steuereinrichtung ST angelaufen ist, wird das Signal am Ausgang GU der ersten Steuereinrichtung WH von dieser ausgewertet. Im Anschluß daran legt die zweite Steuereinrichtung ST H-Potential an die Eingänge NSI und RC der ersten Steuereinrichtung WH. Dies hat die Sperrung des UND-Gatters G7 zur Folge. Das Signal am Ausgang TS wird jedoch nicht unterbrochen, da an einem anderen Eingang des ODER-Gatters G4 das H-Signal vom Eingang NSI anliegt. Zur Erzeugung von Wahlimpulsen wird das Dauersignal mit 0-Potential am Eingang NSI unterbrochen, wodurch entsprechende Impulse am Ausgang TS entstehen. Wird der Kontakt LK der Lauthörtaste bzw. der Kontakt FK der Freisprechtaste kurzzeitig betätigt, so entsteht am Ausgang der betreffenden Entprellschaltung E in bereits beschriebener Weise ein Signal mit H-Polarität, dessen ansteigende Flanke die Kippstufe FF1 bzw. FF2 aus der Ruhelage kippt, wodurch am Ausgang Q ein H-Signal entsteht. Hierdurch wird über das ODER-Gatter G4 am Ausgang TS ein Signal erzeugt, außerdem wird der Transistor T2 bzw. T3 leitend, so daß am Ausgang LA bzw. FR ein Signal anliegt. Über die Gatter G3 bzw. G1 werden die Kippstufen FF1 bzw. FF2 wieder zurückgesetzt und zwar wenn das eine Flip-Flop gesetzt ist und das andere Flip-Flop gesetzt wird, da immer nur entweder die Lauthörtaste oder die Freisprechtaste wirksam sein kann.

Wie bereits beschrieben, hat die Betätigung einer der genannten Kontakte zur Folge, daß die Schleife der Fernsprechteilnehmerstation geschlossen wird, worauf die zweite Steuereinrichtung ST mit Speisestrom versorgt wird. Sobald die zweite Steuereinrichtung ST betriebsbereit ist, d.h. nach Ablauf aller Anlaufvorgänge, wird durch die zweite Steuereinrichtung an den Eingang RC H-Potential angelegt. Mit diesem Signal wird das Zeitglied ZG abgeschaltet. Das Zeitglied ZG wird aufgrund der Betätigung der Lauthörtaste bzw. der Freisprechtaste über das ODER-Gatter G2 angelassen und erzeugt an seinem Ausgang ein Signal, welches die beiden Kippstufen FF1 und FF2 über die ODER-Gatter G3 bzw. G1 mit einem Rücksetzsignal an den betreffenden Eingang RC beaufschlagt, wenn nicht innerhalb einer vorgegebenen Zeit H-Potential am Eingang RC anliegt. Diese Maßnahme dient zur Vermeidung von Fehlfunktionen, wenn die zweite Steuereinrichtung ST fehlerhaft arbeitet, d.h. nach der Anlaufphase nicht auf die Tastensignale reagiert. Für den Kontakt GK ist eine derartige Maßnahme nicht vorgesehen, da bei einem Fehlverhalten der zweiten Steuereinrichtung ST der Benutzer den Handapparat wieder auflegen wird.

Im betriebsbereiten Zustand der zweiten Steuereinrichtung ST legt diese wie bereits beschrieben, H-Potential an den Eingang RC der ersten Steuereinrichtung WH, damit erhalten die Kippstufen FF1 und FF2 an ihrem Eingang RC über das ODER-Gatter G3 bzw. G1 ein Rücksetzsignal, welches die Kippstufen in der rückgesetzten Lage hält. Erfolgt jetzt eine Betätigung der Lauthör-oder Freisprechtaste, so gelangen die Tastensignale direkt über die ODER-Gatter G5 bzw. G6 auf die Transistoren T2 bzw. T3, die daraufhin 0-Potential an den Ausgang LA bzw. FR anlegen.

Die Einrichtungen zur Steuerung der Stromversorgung der Anzeigevorrichtung AZ nach Auflegen des Handapparats bei Gesprächsende bzw. zur Erzeugung eines Rücksetzsignals für die zweite Steuereinrichtung ST, wenn, wie bereits beschrieben, von der Speiseschaltung SP kein Rücksetzsignal erzeugt wird, werden in der Schaltungsanordnung gemäß Fig. 2 nicht gezeigt.

Bei dem Ausführungsbeispiel wird davon ausgegangen, daß der Gabelumschaltkontakt GK als Arbeitskontakt ausgebildet ist und somit bei Aufliegen des Handapparats geschlossen ist. Es ist ebenso denkbar, den Gabelumschaltkontakt GK als Ruhekontakt auszubilden, welcher dann bei abgenommenem Handapparat geschlossen ist.

## Ansprüche

1. Schaltungsanordnung für eine Fernsprechteilnehmerstation mit einer schleifenstromgespeisten Lauthöreinrichtung und Wahlmöglichkeit bei aufgelegtem Handapparat, wobei aufgrund der Betätigung der Lauthörtaste bei aufliegendem Handapparat die Schleife mittels eines Schaltmittels geschlossen wird, dadurch gekennzeichnet, daß das Schaltmittel (T) von einer ersten Steuereinrichtung (WH) gesteuert wird, an welcher die Lauthörtaste (LK) angeschlossen ist und daß die erste Steuereinrichtung (WH) aus einem Engeriespeicher (C1) gespeist wird, welcher im Ruhezustand der Fernsprechteilnehmerstation mit einem geringen Schleifenstrom im geladenen Zustand gehalten wird.

2. Schaltungsanordnung nach Anspruch 1, dadurch gekennzeichnet, daß an der ersten Steuereinrichtung (WH) der Gabelumschaltkontakt (GK) angeschlossen ist und daß bei abgenommenen Handapparat das Schaltmittel (T) auf Veranlassung des Gabelumschaltkontakts (GK) geschlossen wird.

3. Schaltungsanordnung nach einem der Ansprüche 1 oder 2, dadurch gekennzeichnet, daß an der ersten Steuereinrichtung (WH) der Kontakt (FK) einer Freisprechtaste angeschlossen ist und daß bei aufliegendem Handapparat bei Betätigung der Freisprechtaste das Schaltmittel (T) auf Veranlassung der ersten Steuereinrichtung (WH) geschlossen wird.

4. Schaltungsanordnung nach einem der Ansprüche 1 bis 3, dadurch gekennzeichnet, daß die erste Steuereinrichtung (WH) Ausgänge (GU,LA,FR) aufweist, an welchen die Schaltzustände des Gabelumschaltkontakts der Lauthörtaste bzw. der Freisprechtaste signalisiert werden und daß diese Ausgänge (GU,LA,FR) mit einer zweiten Steuereinrichtung (ST) verbunden sind.

5. Schaltungsanordnung nach einem der Ansprüche 1 bis 4, dadurch gekennzeichnet, daß das Schaltmittel (T) über die erste Steuereinrichtung (WH) auf Veranlassung der zweiten Steuereinrichtung (ST) zur Aussendung von Wahlimpulsen gesteuert wird.

6. Schaltungsanordnung nach einem der Ansprüche 1 bis 5,
dadurch gekennzeichnet,
daß die erste Steuereinrichtung (WH) als CMOS-Baustein ausgebildet ist.

7. Schaltungsanordnung nach einem der Ansprüche 1 bis 6,
dadurch gekennzeichnet,
daß die erste Steuereinrichtung (WH) je einen Eingang (G,L,F) zum Anschluß des Gabelumschaltkontakts (GK), der Lauthörtaste bzw. der Freisprechtaste aufweist und daß jeder der Eingänge (G,L,F) mit einem "pull-up"-Widerstand (R1, R2,R3) beschaltet ist.

8. Schaltungsanordnung nach Anspruch 7,
dadurch gekennnzeichnet,
daß die Spannung an die "pull-up"-Widerstände auf Veranlassung der ersten Steuereinrichtung WH getaktet angelegt wird.

9. Schaltungsanordnung nach einem der Ansprüche 7 oder 8,
dadurch gekennzeichnet,
daß im Anschluß an das Anlegen der Spannung an die "pull-up"-Widerstände die Eingänge (G,L,F) auf Veranlassung der ersten Steuereinrichtung (WH) abgefragt werden.

10. Schaltungsanordnung nach einem der Ansprüche 1 bis 9,
dadurch gekennzeichnet,
daß der Gabelumschaltkontakt (GK) und/oder der Kontakt (LK) der Lauthörtaste und/oder der Kontakt (FK) der Freisprechtaste als Folienkontakt ausgebildet ist.

11. Schaltungsanordnung nach einem der Ansprüche 4 bis 10,
dadurch gekennzeichnet,
daß die zweite Steuereinrichtung (ST) aus dem Schleifenstrom bei geschlossener Schleife gespeist wird.

12. Schaltungsanordnung nach einem der Ansprüche 1 bis 11,
dadurch gekennzeichnet,
daß die Tastenbetätigung der Lauthörtaste bzw. der Freisprechtaste in der dersten Steuereinrichtung (WH) durch jeweils eine fest zugeordnete Kippstufe (FF1, FF2) im Ruhezustand gespeichert wird .

13. Schaltungsanordnung nach einem der Ansprüche 1 bis 12,
dadurch gekennzeichnet,
daß im Betriebszustand der zweiten Steuereinrichtung (ST) die Signale der an der ersten Steuereinrichtung (WH) angeschlossenen Kontakte (GK, LK,FK) direkt an die zweite Steuereinrichtung (ST) weitergegeben werden.

14. Schaltungsanordnung für eine Fernsprechteilnehmerstation mit einer Anzeigevorrichtung nach einem der Ansprüche 1 bis 13,
dadurch gekennzeichnet,
daß die erste Steuereinrichtung (WH) die Speisung der Anzeigevorrichtung (AZ) nach Auflegen des Handapparats nach einer bestimmten Zeit abschaltet.

15. Schaltungsanordnung nach einem der Ansprüche 1 bis 14,
dadurch gekennzeichnet,
daß in der ersten Steuereinrichtung (WH) ein Rücksetz-Signal für die zweite Steuereinrichtung (ST) erzeugt wird, wenn einer der an der ersten Steuereinrichtung (WH) angeschlossenen Kontakte (GK,LK,FK) geschlossen wird, solange nach Auflegen des Handapparats noch eine ausreichende Betriebsspannung für die zweite Steuereinrichtung (ST) vorhanden ist.

Fig. 1

TN P 4080

0 285 749

Fig. 2

0 285 749

TN P 4060